# EUROPÄISCHE PATENTSCHRIFT

(11) **EP 2 225 112 B1**
(45) Veröffentlichungstag und Bekanntmachung des Hinweises auf die Patenterteilung: **31.08.2011**
(21) Anmeldenummer: 08801297.6
(22) Anmeldetag: 04.09.2008
(51) Int. Cl.: B60B 5/02, B29C 70/48

(54) **VERFAHREN ZUR HERSTELLUNG VON RADFELGEN AUS TEXTILEM SCHLAUCH UND RADFELGE, HERGESTELLT AUS TEXTILEM SCHLAUCH**
METHOD FOR THE PRODUCTION OF WHEEL RIMS FROM CLOTH TUBING AND WHEEL RIMS PRODUCED FROM CLOTH TUBING
PROCÉDÉ DE PRODUCTION DE JANTES DE ROUE EN TUYAU TEXTILE, ET JANTE DE ROUE CONSTITUÉE PAR UN TUYAU TEXTILE

(30) Priorität: 20.09.2007 DE 102007045108
(43) Veröffentlichungstag der Anmeldung: 08.09.2010
(73) Patentinhaber: Leichtbau-Zentrum Sachsen GmbH, 01307 Dresden (DE)
(72) Erfinder: HUFENBACH, Werner, 01324 Dresden (DE); LEPPER, Martin, 01279 Dresden (DE); WERNER, Jens, 01640 Coswig (DE)
(74) Vertreter: Schmidt, Ursula
(86) Internationale Anmeldenummer: PCT/DE2008/001491
(87) Internationale Veröffentlichungsnummer: WO 2009/036736

(56) Entgegenhaltungen:
- DE-A1-102005 041 940
- GB-A- 2 392 141
- JP-A- 59 032 503
- JP-U- 1 103 402

## Beschreibung

Die Erfindung betrifft ein Verfahren zur Herstellung von Radfelgen aus textilem Schlauch, wobei die Radfelgen wenigstens aus einem Felgenbett mit zwei damit verbundenen Felgenhörnern und einer Radnabe bestehen und wenigstens das Felgenbett mit den Felgenhörnern aus dem textilen Schlauch geformt und in einem Werkzeug konsolidiert wird.

Die Erfindung betrifft des Weiteren eine Radfelge, hergestellt aus textilem Schlauch, der konsolidiert wird, bestehend aus wenigstens einem Felgenbett mit zwei daran angeordneten Felgenhörnern und einer Radnabe.

Aus DE 196 25 797 B4 ist ein Verfahren zur Herstellung eines Rads aus faserverstärktem Kunststoff bekannt geworden, bei dem ein aus einem Fasermaterial hergestellter textiler Schlauch, in dem das Fasermaterial flächig ungleichmäßig verteilt ist, unter Veränderung der flächigen Verteilung des Fasermaterials zu dem Rad verformt und anschließend konsolidiert wird. Das Rad ist dabei komplett aus dem textilen Schlau geformt.

Nachteilig an dieser Lösung ist, dass sich die Faserlage in Abhängigkeit des Durchmessers der Radfelge einstellt und nicht beeinflussbar ist. Die Winkelstellung der Fasern beeinflusst die Belastbarkeit der Nabe jedoch entscheidend.

Außerdem ist von Nachteil, dass die Umformung des Schlauches in die Form des Rades vollständig im Konsolidierungswerkzeug geschieht, was zeitaufwändig und technologisch umständlich ausführbar ist.

Eine weitere Lösung offenbart DE 10 2005 041 940 A1. Die beschriebene Radfelge aus Faserverbundwerkstoff ist auch einteilig aus Felgenbett mit Felgenhörnern und Radnabe aus einem Geflechtschlauch hergestellt, wobei der Geflechtschlauch über Stützkerne oder zueinander fixierte Ringe, die die Form der Radfelge ergeben, gezogen und fixiert wird, anschließend der vorfixierte Schlauch in ein Werkzeug zur Konsolidierung eingebracht und mit einem Matrixmaterial infiltriert wird.

Nachteilig ist auch hier, dass der Faserverlauf des Flechtschlauches bei der Formgebung nicht beeinflussbar ist und dadurch der Belastbarkeit der Radfelge Grenzen gesetzt sind.

Dadurch, dass sowohl die Radnabe als auch das Felgenbett gezwungenermaßen aus dem gleichen Material hergestellt sein müssen, beispielsweise aus einem Kohlefasergeflecht gefertigt werden, ist eine solche Radfelge für bestimmte Einsatzfälle ungeeignet, z. B. wenn die Radnabe mit einer Bremsscheibe in Wirkverbindung stehen muss, die bei Betrieb des Rades Wärme erzeugt, die das Kohlefasergeflecht als schlechter Wärmeleiter nicht ableiten kann.

Dokument JP401 103402 U beschreibt die Verbindung ein Felgenbett mit einer Radnabe durch eine Verformung des Felgenbetts. Diese Verformung geht aber in der Radnabe hinein und umfasst die nicht.

Es ist daher Aufgabe der Erfindung, ein Verfahren zur Herstellung von Radfelgen der eingangs genannten Art so weiterzubilden, dass die Radfelgen in Größe, Form und Materialeinsatz variabel, dem jeweiligen Einsatzfall entsprechend, hergestellt werden können und dass trotz Leichtbauweise eine belastungsangepasste Faserlage im Felgenbett, insbesondere im Nabenbereich, erreicht werden kann.

Erfindungsgemäß wird die Aufgabe verfahrensseitig dadurch gelöst, dass der textile Schlauch zur Bildung von wenigstens zwei Schlauchlagen um etwa seine halbe Länge umgeschlagen wird, dass im Umschlagbereich das eine Felgenhorn geformt wird, dass danach der Schlauch in die Werkzeugform eingeführt und fixiert wird, dass anschließend die Radnabe in die Werkzeugform eingelegt und positioniert wird, wobei wenigstens eine der Schlauchlagen derart geformt wird, dass sie den äußeren radialen Bereich der Radnabe formschlüssig umfasst, dass das zweite Felgenhorn durch Umschlagen der Schlauchenden in Richtung Radnabe geformt wird und dass anschließend die Werkzeugform dicht verschlossen wird.

Mit diesem erfindungsgemäßen Verfahren wird erreicht, dass insbesondere im Nabenbereich eine belastungsangepasste Faserlage gezielt beeinflusst werden kann.

Vorteilhaft ist dabei auch, dass Radnabe und Felgenbett mit Felgenhörnern als voneinander getrennte Teile einsetzbar und im Konsolidierungswerkzeug unlösbar miteinander verbunden werden können. Die Radnabe kann dabei je nach Einsatzgebiet völlig unterschiedlich gestaltet sein, so kann sie scheiben- oder konusförmig oder ein ästhetisch freigeformtes Gebilde sein.

Auch der Materialeinsatz kann den Gegebenheiten angepasst werden. So kommen sowohl Materialien aus Faserverbundwerkstoffen oder auch aus metallischen beziehungsweise keramischen Werkstoffen oder aus Kunststoffen in Frage.

Ebenfalls abhängig vom Einsatzgebiet ist es, den textilen Schlauch aus mehreren ineinander gefügten Einzelschläuchen zu formen.

Aus technologischer Sicht von Vorteil ist auch, dass - wie aus dem offenbarten Stand der Technik bekannt - kein nachträglicher Fügeschritt zur Verbindung der Radnabe und des Felgenbettes notwendig ist. Die Fügung der beiden Teile erfolgt verfahrensintegriert.

Nach einer vorzugsweisen und vorteilhaften Ausgestaltung des erfindungsgemäßen Verfahrens wird vor und nach dem Einlegen der Radnabe beiderseits jeweils eine Hinterschneidung durch wenigstens eine der Schlauchlagen zum formschlüssigen Umfassen des äußeren radialen Bereiches der Radnabe geformt.

Die Hinterscheidungen verbinden sich im Konsolidierungsverfahren unlöslich mit den äußeren radialen Bereichen der Radnaben, die einen zum Felgenbett hin formschlüssig ausgebildeten Nabenrand aufweisen.

Die Hinterschneidungen können entweder von einer Schlauchlage gebildet werden, wobei die zweite Schlauchlage durch das Konsolidierungswerkzeug hindurchgeführt und nach Bildung des zweiten Felgenhorns in das Innere in Richtung Radfelge zurückgeführt wird und eine erste Hinterschneidung vor dem Einführen der Radnabe und die zweite Hinterschneidung nach dem Positionieren der Radnabe im Inneren des Konsolidierungswerkzeuges gebildet wird oder beide Schlauchlagen formen gleichermaßen die Hinterschneidungen und werden zur Bildung des zweiten Felgenhornes weiter und durch Umschlagen der Lagenenden zurück in Richtung Radnabe geführt. Dort wird ein Überlappungsbereich gebildet, der durch das Konsolidierungsverfahren mit den Schlauchlagenteilen verklebt und verschmilzt.

Nach einer weiteren vorzugsweisen Fortbildung des erfindungsgemäßen Verfahrens wird vor dem Einlegen der textilen Schlauchlagen in die Werkzeugform ein Verstärkungselement aus einem textilen Material in den Bereich der zu formenden Hinterschneidungen eingebracht, das die Schlauchlagen in diesem Bereich umfasst.

Damit können Schwachstellen, die durch die Unterbrechung des kontinuierlichen Faserverlaufes des textilen Schlauches, die durch die Hinterschneidungen entstehen können, kompensiert werden.

Der Verfahrensablauf zur Herstellung der Leichtbauradfelgen kann dadurch einfacher und zeitsparender durchgeführt werden, wenn zur Formung der Felgenhörner und/oder der Hinterschneidungen Stützelemente zur Fixierung der Form der Radfelge eingesetzt werden.

Wenn die flexiblen Schlauchlagen zur Bildung der Felgenhörner und/oder der Hinterschneidungen unter zu Hilfenahme eines Stützelementes geformt werden können, ist das Einlegen des textilen Schlauches in die Konsolidierungsform wesentlich einfacher und unkomplizierter. Die Stützelemente verbleiben im Felgenbett und werden unlösbar mit diesem verbunden.

Zur Durchführung des erfindungsgemäßen Verfahrens ist vorgesehen, dass die Werkzeugform durch unterschiedliches Aufweiten der Schlauchlagen beim Schließen der Werkzeugform und/oder durch die Ausbildung der Felgenhörner, die Radfelge formt.

Die Werkzeugform des Konsolidierungswerkzeuges besteht aus mehreren Teilen, einem die Form der Felge bildenden ersten Formteil, durch das die Schlauchlagen durchgeführt werden, einem hinteren Seitenteil, dass die Form der Schlauchlagen zwischen dem ersten Felgenhorn und der Radnabe fixiert und die Form seitlich verschließt und einem vorderen Seitenteil, dass die Form seitlich vom zweiten Felgenhorn bis zur Radnabe verschließt und dabei die Schlauchlagen in ihrer Form fixiert.

Zur Konsolidierung der Radfelge erfolgt nach dem vollständigen und dichten Verschließen der Konsolidierungsform eine Infiltration des textilen Schlauches durch Evakuieren der Formkavität und darauf folgender Zuführung eines Reaktionsharzsystems.

Damit wird eine optimale Haftung zwischen Felgenbett und Radnabe gewährleistet, der Faserverbundwerkstoff beziehungsweise die textilen Schlauchlagen erhalten so die notwendige, durch die Belastung bedingte Festigkeit.

Dabei kann die Radnabe unabhängig vom Felgenbett gestaltet sein und wird unlösbar mit dem Felgenbett verbunden.

Die erfindungsgemäße Aufgabe wird des Weiteren durch eine Radfelge, hergestellt aus textilem Schlauch, der konsolidiert wird, bestehend aus wenigstens einem Felgenbett mit zwei daran angeordneten Felgenhörnern und einer Radnabe, dadurch gelöst, dass der textile Schlauch die Radfelge mit Felgenbett und Felgenhörnern bildet und die Radnabe beliebiger Geometrie, Form und Material im Inneren des Felgenbettes von dem textilen Schlauch über ihren äußeren radialen Bereich durch bei der Herstellung der Radfelge (1) geformte Hinterschneidungen (7, 8) formschlüssig umfasst und fixiert ist.

Diese erfindungsgemäße Radfelge gestattet ein variables Herstellen von Radfelgen in Leichtbauweise mit Radnaben unterschiedlicher Form, Größe und Materialeinsatz.

Gewichtsmäßig von Vorteil ist, wenn der textile Schlauch aus einem Geflecht aus Kohlefaserverbundwerkstoffen oder aus einem gewickelten Gewebe, einem Gestick oder einem Gestrick hergestellt ist.

Nach einer vorzugsweisen Ausbildung der erfindungsgemäßen Radnabe ist diese über ihren äußeren Umfang unlösbar mit dem Felgenbett verbunden.

Damit wird der Einsatz belastungsgerechter Radnaben gewährleistet, der abhängig ist vom jeweiligen Fahrzeug, für das sie verwendet werden sollen.

Insbesondere im Bereich der Fügezone von Radnabe und Felgenbett kann es aus Belastungsgründen notwendig sein, dass im Bereich der Radnabe, beide Hinterschneidungen überspannend, ein textiles Verstärkungselement angeordnet ist, das den Außenquerschnitt des Felgenbettes umfasst.

Damit können Winkeländerungen der Faserlagen, die die Lebensdauer der Radfelgen negativ beeinflussen könnten, ausgeglichen werden.

Zur besseren und einfacheren Formgestaltung der Radfelgen ist es von Vorteil, wenn Stützelemente zur Bildung der Felgenhörner und/oder der Hinterschneidungen im Felgenbett eingelagert sind.

Dabei sind die Stützelemente vorzugsweise als ring- oder kernartige Teile ausgebildet und in den textilen Schlauch eingebettet.

Die Stützelemente tragen zur Stabilisierung der Radfelgen, zumindest während des Herstellungsprozesses bei.

Die Erfindung soll nachfolgend anhand eines Ausführungsbeispieles näher erläutert werden. Die zugehörige Zeichnung zeigt dabei in
- Fig. 1: eine prinzipielle Schnittdarstellung des texti- len Schlauches, hier aus einem Kohlefaserver- bundgeflecht hergestellt, in zwei hälftige Schlauchlagen umgeschlagen, mit einem ausge- formten ersten Felgenhorn, vor dem Einlegen in das Konsolidierungswerkzeug,
- Fig. 2: die textilen Schlauchlagen nach Fig. 1, einge- legt in die Werkzeugform des Konsolidierungs- werkzeuges, ebenfalls in Schnittdarstellung,
- Fig. 3: die geschlossene Werkzeugform des Konsolidie- rungswerkzeuges mit geformter Radfelge und po- sitionierter Radnabe, wobei eine der Schlauch- lagen die Hinterschneidungen für die Fixierung der Radnabe bildet und
- Fig. 4: ein weiteres Ausführungsbeispiel des erfin- dungsgemäßen Verfahrens, bei der die geformte Radfelge mit Radnabe veranschaulicht ist, eben- falls in prinzipieller Schnittdarstellung, die zeigt, dass beide Schlauchlagen gleichzeitig die Hinterschneidungen bilden.

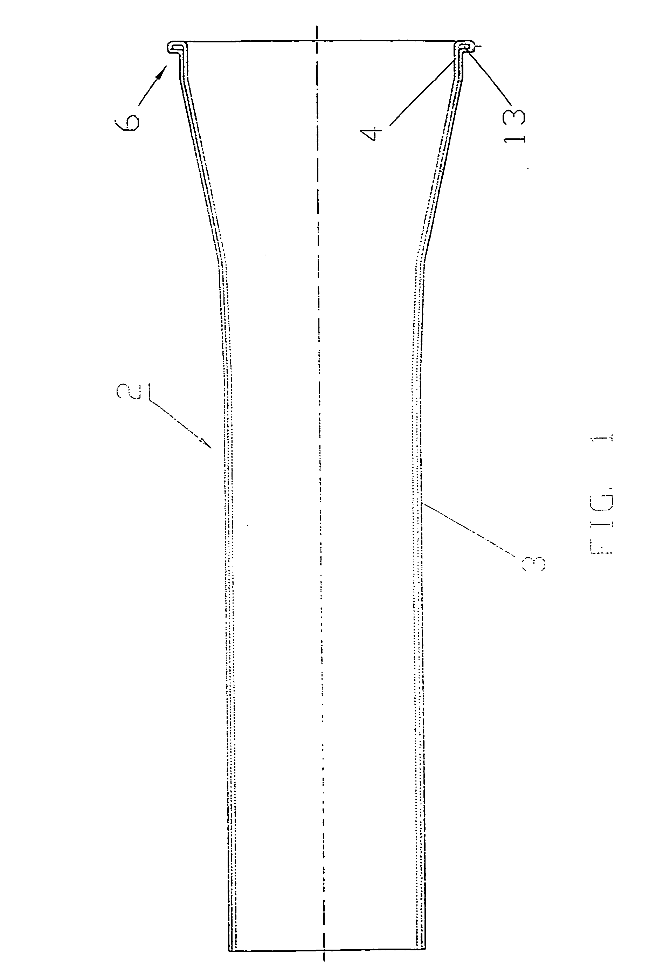

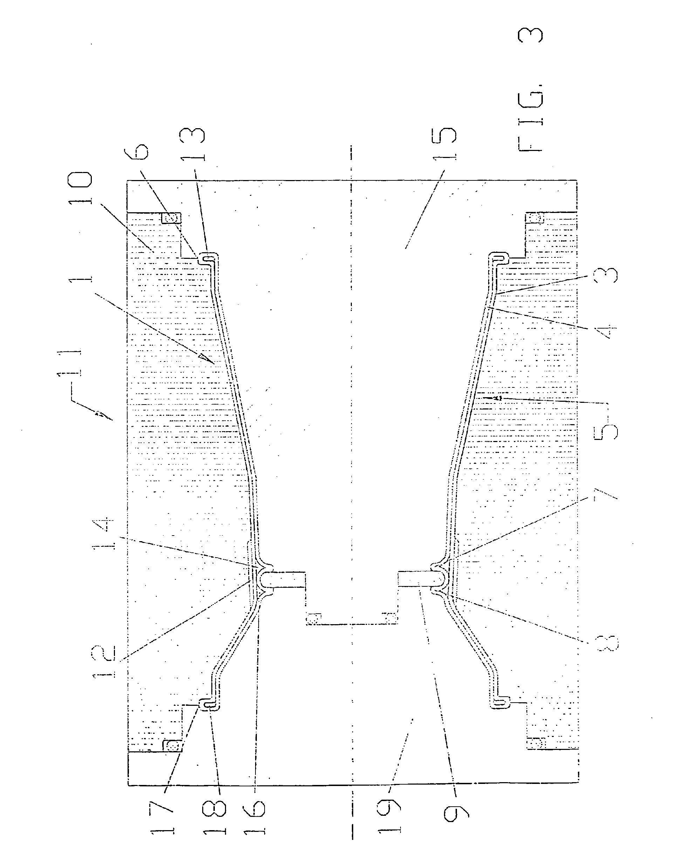

Nach den Fig. 1 bis 3 wird die Radfelge 1 aus einem textilen Schlauch 2 hier in Form eines Kohlefaserverbundgeflechtes, gebildet. Der textile Schlauch 2 kann auch aus einem Glas-, Keramik- oder einer Naturfaser hergestellt sein. Nach dem Ausführungsbeispiel wird der textile Schlauch 2 in etwa seiner Hälfte umgestülpt, so dass zwei unabhängige Schlauchlagen 3 und 4 gebildet werden, die das Felgenbett 5 formen. Die Schlauchlage 3 wird durchgehend in axialer Lage zum ersten Felgenhorn 6 und von dort nach innen in das Felgenbett 5 gestülpt. Mit der Schlauchlage 4 werden die Hinterschneidungen 7 und 8 zur Fixierung und Positionierung der Radnabe 9 geformt.

Möglich ist auch, den textilen Schlauch 2 aus Einzelschläuchen herzustellen, welche zu einem konzentrischen Gesamtlagenaufbau kombiniert werden können, wobei die Einzellagen nicht die gesamte Struktur des Felgenbettes mit den Felgenhörnern durchziehen müssen.

Vor dem Einlegen der Schlauchlagen 3 und 4 in das Formteil 10 der dreiteiligen Werkzeugform 11 des Konsolidierungswerkzeuges wird ein Verstärkungselement 12 in das Formteil 10 eingebracht und in dem Bereich angeordnet, in dem die Radnabe 9 mit dem Felgenbett 5 verbunden werden soll. Es dient dem Ausgleich der Strukturunterbrechung innerhalb des Kohlefaserverbundgeflechtes durch die Ausbildung der Hinterschneidungen 7, 8 der inneren Schlauchlage 4.

Das erste Felgenhorn 6 wird dadurch geformt, dass ein Stützelement 13 angeordnet ist, um das der textile Schlauch 2 gestülpt wird und einen Steg bildet, der als seitliches Halteelement für den Reifen dient.

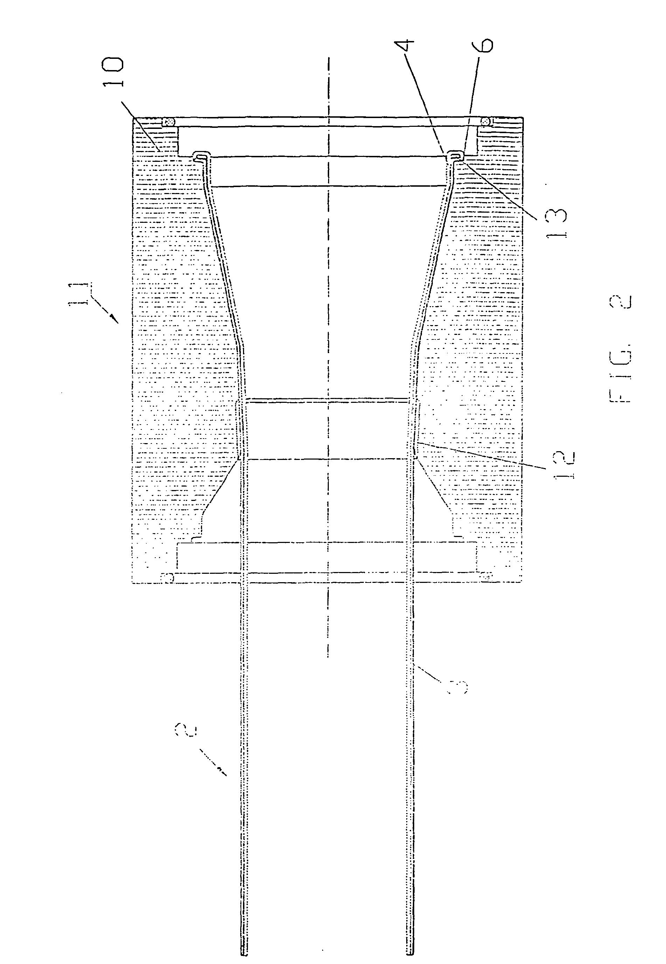

Nach dem Umstülpen und der Bildung der Schlauchlagen 3, 4 wird, wie in Fig. 2 dargestellt, der textile Schlauch 2 in das erste Formteil 10 der Werkzeugform 11 eingelegt.

Die innere Schlauchlage 4 wird zu einem weiteren Stützelement 14 geführt, dass der Formung des ersten Hinterschnittes 7 dient, mit dem eine Wulst gebildet wird, die in das Innere der Radfelge 1 ragt und als Anschlag und nach der Konsolidierung als unlösbare Verbindung mit dem äußeren Umfang der Radnabe 9 dient. Das Stützelement 14 ist ebenfalls ringförmig ausgebildet. Danach wird das hintere Seitenteil 15 der Werkzeugform 11 geschlossen und damit die Schlauchlagen 3 und 4 in diesem Bereich fixiert.

Nachdem die Radnabe 9 in die Werkzeugform 11 eingebracht und positioniert worden ist, wird durch die innere Schlauchlage 4 die weitere Hinterschneidung 8 geformt, wobei die Wulst wiederum zur Positionierung und Halterung mittels eines ringförmigen Stützelementes 16 gebildet wird.

Beide Schlauchlagen 3, 4 werden anschließend zur Formung des zweiten Felgenhornes 17 zum Ende des Formteils 10 geführt und mit Hilfe eines weiteren Stützelementes 18 in Richtung der Radnabe 9 umgestülpt.

Das vordere Seitenteil 19 der Werkzeugform 11 wird eingebracht und die Werkzeugform 11 wird dicht und formgebend verschlossen.

Im Inneren der Radfelge wird durch das umgestülpte Ende der Schlauchlagen 3, 4 ein Überlappungsbereich gebildet, der sich durch die Konsolidierung der trockenen, textilen Schlauchlagen 3, 4 durch Tränkung mittels eines Harzinjektionsverfahren mit den Schlauchlagen 3, 4 unlösbar verbindet.

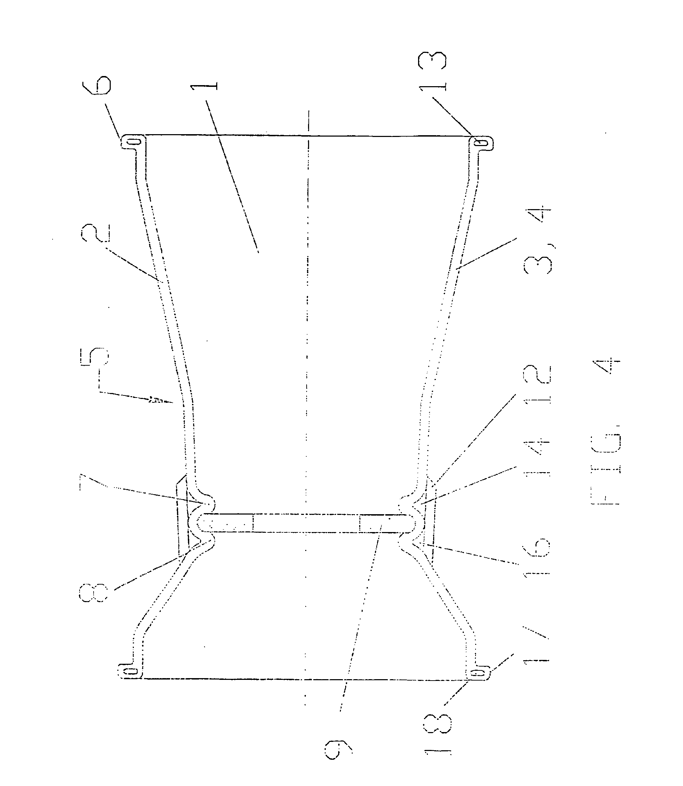

Fig. 4 veranschaulicht ein anderes Ausführungsbeispiel zur Bildung der Hinterschneidungen 7, 8 für die Positionierung und unlösbare Befestigung der Radnabe 9 mit dem textilen Schlauch 2.

Hiernach werden beide Schlauchlagen 3, 4 zur Formung der Hinterschneidungen 7, 8 eingesetzt, wobei wiederum Stützelemente 13, 14, 16, 18 zur Vereinfachung des Verfahrensablaufes bei der Formgebung benutzt werden.

Möglich ist auch, die Radfelge 1 ohne Einsatz von ringartigen oder auch kernartigen Stützelementen zu formen.

Erfindungsgemäß können Radnaben beliebiger Gestalt, Größe und Materialeinsatz eingesetzt werden. Sie können sowohl aus einem Faserverbundwerkstoff in Form eines Gewebes, Geflechtes, Gestrick, Gestick oder ähnliches hergestellt sein, als auch aus einem metallischen beziehungsweise keramischen Werkstoff oder aus einem Kunststoff bestehen.

Für die Faserverstärkung des Faserverbundwerkstoffes können Fasern verschiedenster Art eingesetzt werden, so z. B. Carbonfasern, Glasfasern, Aramidfasern, Polymerfasern, Keramikfasern, Metallfasern usw. Auch die Matrix der eingesetzten Faserverbundwerkstoffe kann duromer, thermoplastisch, keramisch oder metallisch sein.

Möglich ist des Weiteren der Einsatz mehrerer ineinander geführter Einzelschläuche.

### Bezugszeichenliste

- 1: Radfelge
- 2: textiler Schlauch, Kohlefaserverbundgeflecht
- 3: äußere Schlauchlage
- 4: innere Schlauchlage
- 5: Felgenbett
- 6: erstes Felgenhorn
- 7: Hinterschneidung
- 8: Hinterschneidung
- 9: Radnabe
- 10: Formteil
- 11: Werkzeugform
- 12: Verstärkungselement
- 13: Stützelement
- 14: Stützelement
- 15: hinteres Seitenteil
- 16: Stützelement
- 17: zweites Felgenhorn
- 18: Stützelement
- 19: vorderes Seitenteil

## Patentansprüche

1. Verfahren zur Herstellung von Radfelgen aus textilem Schlauch, wobei die Radfelgen wenigstens aus einem Felgenbett mit zwei damit verbundenen Felgenhörnern und einer Radnabe bestehen und wenigstens das Felgenbett mit den Felgenhörnern aus dem textilen Schlauch geformt und in einem Werkzeug konsolidiert wird, **dadurch gekennzeichnet, dass** der textile Schlauch (2) zur Bildung von wenigstens zwei Schlauchlagen (3, 4) um etwa seine halbe Länge umgeschlagen wird, dass im Umschlagbereich das eine Felgenhorn (6) geformt wird, dass danach der Schlauch (2) in die Werkzeugform (11) eingeführt und fixiert wird, dass anschließend die Radnabe (9) in die Werkzeugform (11) eingelegt und positioniert wird, wobei wenigstens eine der Schlauchlagen (3, 4) derart geformt wird, dass sie den äußeren radialen Bereich der Radnabe (9) formschlüssig umfasst, dass das zweite Felgenhorn (17) durch Umschlagen der Schlauchenden in Richtung Radnabe (9) geformt wird und dass anschließend die Werkzeugform (11) dicht verschlossen wird.

2. Verfahren zur Herstellung von Radfelgen nach Anspruch 1, **dadurch gekennzeichnet, dass** vor und nach dem Einlegen der Radnabe (9) jeweils eine Hinterschneidung durch wenigstens eine der Schlauchlagen (3, 4) zum formschlüssigen Umfassen des äußeren radialen Bereiches der Radnabe (9) geformt wird.

3. Verfahren zur Herstellung von Radfelgen nach Anspruch 1 und 2, **dadurch gekennzeichnet, dass** vor dem Einlegen der textilen Schlauchlagen (3, 4) in die Werkzeugform (11) ein Verstärkungselement (12) aus einem textilen Material in den Bereich der zu formenden Hinterschneidungen (7, 8) eingebracht wird, das die Schlauchlagen (3, 4) in diesem Bereich umfasst.

4. Verfahren zur Herstellung von Radfelgen nach Anspruch 1 bis 3, **dadurch gekennzeichnet, dass** zur Formung der Felgenhörner (6, 17) und/oder der Hinterschneidungen (7, 8) Stützelemente (13, 14, 16, 18) zur Fixierung der Form der Radfelge (1) eingesetzt werden.

5. Verfahren nach Anspruch 1 und wenigstens einem der Ansprüche 2 bis 4, **dadurch gekennzeichnet, dass** die Werkzeugform (11) durch unterschiedliches Aufweiten der Schlauchlagen (3, 4) über ihre axiale Länge beim Schließen der Werkzeugform (11) und/oder durch die Ausbildung der Felgenhörner (6, 17), die Radfelge (1) formt.

6. Verfahren nach Anspruch 1 bis 5 **dadurch gekennzeichnet, dass** zur Konsolidierung der Radfelge (1) eine Infiltration des textilen Schlauches (2) durch Evakuieren der Formkavität und darauf folgender Zuführung eines Reaktionsharzsystems erfolgt.

7. Verfahren nach Anspruch 1 bis 6, **dadurch gekennzeichnet, dass** die Radnabe (9) unabhängig vom Felgenbett (5) gestaltet ist und unlösbar mit dem Felgenbett verbunden wird.

8. Radfelge, hergestellt aus textilem Schlauch, der konsolidiert ist, bestehend aus wenigstens einem Felgenbett mit zwei daran angeordneten Felgenhörnern und einer Radnabe, **dadurch gekennzeichnet, dass** der textile Schlauch (2) die Radfelge (1) mit Felgenbett (5) und Felgenhörnern (6, 17) bildet und die Radnabe (9) beliebiger Geometrie, Form und Material im Inneren des Felgenbettes (5) von dem textilen Schlauch (2) über ihren äußeren radialen Bereich durch bei der Herstellung der Radfelge (1) geformte Hinterschneidungen (7, 8) formschlüssig umfasst und fixiert ist.

9. Radfelge nach Anspruch 8, **dadurch gekennzeichnet, dass** der textile Schlauch (2) aus einem Geflecht von Kohlefaserverbundwerkstoffen oder aus einem gewickelten Gewebe, einem Gestick oder einem Gestrick hergestellt ist.

10. Radfelge nach Anspruch 8 und 9, **dadurch gekennzeichnet, dass** die Radnabe (9) über ihren äußeren Umfang unlösbar mit dem Felgenbett (5) verbunden ist.

11. Radfelge nach Anspruch 8 bis 10, **dadurch gekennzeichnet, dass** im Bereich der Radnabe (9) ein textiles Verstärkungselement (12) angeordnet ist, das die Außenform des Felgenbettes (5) umfasst.

12. Radfelge nach Anspruch 8 bis 11, **dadurch gekennzeichnet, dass** Stützelemente (13, 14, 16, 18) zur Bildung der Felgenhörner (6, 17) und/oder der Hinterschneidungen (7, 8) im Felgenbett (5) eingelagert sind.

13. Radfelge nach Anspruch 12, **dadurch gekennzeichnet, dass** die Stützelemente (13, 14, 16, 18) als ring- oder kernförmige Elemente ausgebildet sind und in den textilen Schlauch (2) eingebettet sind.

## Claims

1. Method for the production of wheel rims from cloth tubing, wherein the wheel rims comprise at least a rim base with two rim flanges connected thereto and a wheel hub, and at least the rim base with the rim flanges is formed from the cloth tube and is consolidated in a tool, **characterized in that** the cloth tube (2) is folded over by about half the length thereof to form at least two tube layers (3, 4), **in that** one rim flange (6) is formed in the region of the fold, **in that** the tube (2) is then inserted into the tool mould (11) and fixed therein, **in that** the wheel hub (9) is then placed in the tool mould (11) and positioned therein, at least one of the tube layers (3, 4) being formed in such a way that it encloses the outer radial region of the wheel hub (9) in a positive fit, **in that** the second rim flange (17) is formed by folding over the tube ends in the direction of the wheel hub (9), and **in that** the tool mould (11) is then closed in a leak-tight manner.

2. Method for the production of wheel rims according to Claim 1, **characterized in that**, before and after the placement of the wheel hub (9), an undercut is formed by at least one of the tube layers (3, 4) to enable the outer radial region of the wheel hub (9) to be enclosed in a positive fit.

3. Method for the production of wheel rims according to Claims 1 and 2, **characterized in that**, before the cloth tube layers (3, 4) are placed in the tool mould (11), a reinforcing element (12) made from a textile material is introduced into the region of the undercuts (7, 8) to be formed and encloses the tube layers (3, 4) in said region.

4. Method for the production of wheel rims according to Claims 1 to 3, **characterized in that** supporting elements (13, 14, 16, 18) for the purpose of fixing the shape of the wheel rim (1) are inserted to form the wheel rims (6, 17) and/or the undercuts (7, 8).

5. Method according to Claim 1 and at least one of Claims 2 to 4, **characterized in that** the tool mould (11) forms the wheel rim (1) by expanding the tube layers (3, 4) by different amounts over the axial length thereof when the tool mould (11) is closed and/or by forming the rim flanges (6, 17).

6. Method according to Claims 1 to 5, **characterized in that** infiltration of the cloth tube (2) by evacuation of the mould cavity and subsequent supply of a reaction resin system is performed in order to consolidate the wheel rim (1).

7. Method according to Claims 1 to 6, **characterized in that** the wheel hub (9) is formed independently of the rim base (5) and connected permanently to the rim base.

8. Wheel rim produced from cloth tubing which is consolidated, comprising at least one rim base with two rim flanges arranged thereon and a wheel hub, **characterized in that** the cloth tube (2) forms the wheel rim (1) with the rim base (5) and rim flanges (6, 17), and the wheel hub (9), which can be of any desired geometry, shape and material, is surrounded and fixed with a positive fit over the outer radial region thereof in the interior of the rim base (5) by the cloth tube (2) by means of undercuts (7, 8) formed during the production of the wheel rim (1).

9. Wheel rim according to Claim 8, **characterized in that** the cloth tube (2) is produced from a braid made from carbon fibre composite materials or from a wrapped woven fabric, a stitched fabric or a knitted fabric.

10. Wheel rim according to Claims 8 and 9, **characterized in that** the wheel hub (9) is connected permanently to the rim base (5) over the outer circumference of said wheel hub.

11. Wheel rim according to Claims 8 to 10, **characterized in that** a cloth reinforcing element (12), which surrounds the external shape of the rim base (5), is arranged in the region of the wheel hub (9).

12. Wheel rim according to Claims 8 to 11, **characterized in that** supporting elements (13, 14, 16, 18) for forming the rim flanges (6, 17) and/or the undercuts (7, 8) are embedded in the rim base (5).

13. Wheel rim according to Claim 12, **characterized in that** the supporting elements (13, 14, 16, 18) are designed as annular or core-type elements and are embedded in the cloth tube (2).

## Revendications

1. Procédé de fabrication de jantes de roue en tuyau textile, les jantes de roue étant constituées d'au moins un fond de jante avec deux rebords de jante reliés à celui-ci et un moyeu de roue et au moins le fond de jante étant formé avec les rebords de jante en tuyau textile et étant consolidé dans un outil, **caractérisé en ce que** le tuyau textile (2) est retourné sur environ sa demi-longueur pour former au moins deux couches de tuyau (3, 4), **en ce que** l'un des rebords de jante (6) est formé dans la région de retournement, **en ce qu'**ensuite le tuyau (2) est introduit et fixé dans le moule d'outil (11), **en ce qu'**ensuite le moyeu de roue (9) est introduit et positionné dans le moule d'outil (11), au moins l'une des couches de tuyau (3, 4) étant formée de telle sorte qu'elle entoure par engagement par coopération de forme la région radiale extérieure du moyen de roue (9), **en ce que** le deuxième rebord de jante (17) est formé par retournement des extrémités de tuyau dans la direction du moyeu de roue (9) et **en ce qu'**ensuite le moule d'outil (11) est fermé hermétiquement.

2. Procédé de fabrication de jantes de roue selon la revendication 1,
**caractérisé en ce qu'**avant et après l'introduction du moyen de roue (9), une contre-dépouille est formée à chaque fois par au moins l'une des couches de tuyau (3, 4) pour entourer par engagement par coopération de forme la région radiale extérieure du moyeu de roue (9).

3. Procédé de fabrication de jantes de roue selon les revendications 1 et 2, **caractérisé en ce qu'**avant l'introduction des couches de tuyau textiles (3, 4) dans le moule d'outil (11), un élément de renforcement (12) en matériau textile est introduit dans la région des contre-dépouilles à former (7, 8), lequel entoure dans cette région les couches de tuyau (3, 4).

4. Procédé de fabrication de jantes de roue selon les revendications 1 à 3, **caractérisé en ce que** pour la formation des rebords de jante (6, 17) et/ou des contre-dépouilles (7, 8), des éléments de support (13, 14, 16, 18) sont utilisés pour la fixation de la forme de la jante de roue (1).

5. Procédé selon la revendication 1 et au moins l'une quelconque des revendications 2 à 4, **caractérisé en ce que** le moule d'outil (11) forme la jante de roue (1) par élargissement différent des couches de tuyau (3, 4) sur leur longueur axiale lors de la fermeture du moule d'outil (11) et/ou par la réalisation des rebords de jante (6, 17).

6. Procédé selon les revendications 1 à 5, **caractérisé en ce que** pour la consolidation de la jante de roue (1), une infiltration du tuyau textile (2) a lieu par mise sous vide de la cavité du moule et par alimentation subséquente d'un système de résine réactive.

7. Procédé selon les revendications 1 à 6, **caractérisé en ce que** le moyeu de roue (9) est configuré de manière indépendante du fond de jante (5) et est connecté de manière inamovible au fond de jante.

8. Jante de roue, fabriquée en tuyau textile, qui est consolidé, constituée d'au moins un fond de jante avec deux rebords de jante disposés sur celle-ci et un moyeu de roue, **caractérisée en ce que** le tuyau textile (2) forme la jante de roue (1) avec le fond de jante (5) et les rebords de jante (6, 17), et le moyeu de roue (9) de géométrie, forme et matériau quelconques est entouré par engagement par coopération de forme et est fixé à l'intérieur du fond de jante (5) par le tuyau textile (2) sur sa région radiale extérieure par des contre-dépouilles (7, 8) formées lors de la fabrication de la jante de roue (1).

9. Jante de roue selon la revendication 8, **caractérisée en ce que** le tuyau textile (2) est fabriqué en un treillis de matériaux composites renforcés par des fibres de carbone, ou en un tissu enroulé, ou en un matériau brodé ou tricoté.

10. Jante de roue selon les revendications 8 et 9, **caractérisée en ce que** le moyeu de roue (9) est connecté sur sa périphérie externe de manière inamovible au fond de jante (5).

11. Jante de roue selon les revendications 8 à 10, **caractérisée en ce que** dans la région du moyeu de roue (9) est disposé un élément de renforcement textile (12) qui entoure la forme extérieure du fond de jante (5).

12. Jante de roue selon les revendications 8 à 11, **caractérisé en ce que** des éléments de support (13, 14, 16, 18) sont incorporés dans le fond de jante (5) pour la formation des rebords de jante (6, 17) et/ou des contre-dépouilles (7, 8).

13. Jante de roue selon la revendication 12, **caractérisée en ce que** les éléments de support (13, 14, 16, 18) sont réalisés sous forme d'éléments en forme de bague ou de noyau, et sont noyés dans le tuyau textile (2).
